# EUROPEAN PATENT SPECIFICATION

(11) **EP 4 253 687 B1**
(45) Date of publication and mention of the grant of the patent: **01.01.2025**
(21) Application number: 23000051.5
(22) Date of filing: 31.03.2023
(51) Int. Cl.: E04F 13/08, E04F 13/10, E04F 13/28

(54) **SYSTEM FOR INSULATING AND DRY CLADDING WITH LIMITED THICKNESS OF THE PERIMETER, WITH VENTILATED AIR GAP, OF A BUILDING WALL**
SYSTEM ZUR DÄMMUNG UND TROCKENVERKLEIDUNG MIT BEGRENZTER DICKE DES UMFANGS MIT BELÜFTETER LUFTKAMMER EINER GEBÄUDEWAND
SYSTÈME D'ISOLATION ET DE REVÊTEMENT SEC D'ÉPAISSEUR LIMITÉE DU PÉRIMÈTRE, AVEC CHAMBRE A AIR VENTILÉE, D'UN MUR DE BÂTIMENT

(30) Priority: 01.04.2022 IT 202200006575
(43) Date of publication of application: 04.10.2023
(73) Proprietor: EV Services S.r.l., 10138 Torino (TO) (IT)
(72) Inventor: Marinelli, Giuseppe, 10138 Torino (TO) (IT)
(74) Representative: Aprà, Mario

(56) References cited:
- EP-A2- 1 310 612
- EP-B1- 2 231 959
- DE-U1- 8 810 439

## Description

### Field of the invention

The present invention relates to a system for insulating and dry cladding with limited thickness of the perimeter, with ventilated air gap, of a building wall.

State of the art the standard UNI 11018 defines the ventilated facade as a "type of advanced screen facade in which the gap between the cladding and the wall is designed in such a way that the air present therein can flow naturally and/or artificially by chimney effect, controlled according to the seasonal and/or daily needs, in order to improve the overall thermo-energetic performances".

The ventilated facade (or ventilated wall) is a particular type of perimeter cladding of the walls of a building which provides for the dry application, on the external surface of the building, of panels of suitable thickness, not strictly adhering to the structure. It is essentially characterized by the position of the outer coating layer, which does not adhere to the plugging wall, but is spaced apart to form a gap. In this way, the natural circulation of the air in the space of the gap is obtained, due to the convective motion produced by the presence of openings arranged at the base and at the top of the facade. The ventilated facades offer various advantages such as:
- The thermally insulating layer is protected from the moisture coming from the outside,
- the movement of the air in the gap contributes to drying any water infiltrations and to remove the heat accumulated by solar radiation in the cladding layer, improving also the thermal insulation of the wall during the winter period.

The ventilated facades require a design that carefully considers the heat exchanges and the implementation of constructive details suitable to guarantee the correct operation. A wide range of materials can be used for the cladding of ventilated facades, including:
- Natural stone: noble and durable material, used in the millennial tradition for the construction and subsequently for the cladding of the facades, for decades it has been used to cover buildings, adopting the system of the ventilated wall. Not all the stones are suitable for this use and it is necessary to evaluate, in addition to the texture and color of the material, important from the esthetic and architectural point of view of the facade, the technical features, also to choose material which during the time have withstood the frost, atmospheric and polluting agents, and carefully to study the mechanical anchoring systems, relying on professionals in the field, who have gained good experience, in compliance with the standard UNI EN 1469:2015 (natural stone products - sheets for claddings - requirements).
- Stoneware: slight, durable, antifreeze, is available in various colors and textures.
- Metal: metal laminates with layers overlapped of zinc, titanium, aluminum, copper and steel alloys.
- Terracotta: It is used in slabs of reduced thickness, in different shapes and sizes.
- Quartz: For ventilated facades it is proposed in slabs made of a siliceous mixture, endowed with great mechanical and physical performances.
- Wood: wood, used in bio-building, is applied to ventilated facades in a different way depending on the manufacturer. One of the most common methods is to provide a substructure with fir strips, a micro-perforated insect mesh, and larch strips applied to the first layer mechanically.

The design choice of the specific materials with which to make the ventilated paneling (for example composite aluminum panels, plastic laminates, ceramic or tile panels, glass, metal panels), also allows the designer to achieve particular esthetic results.

Criticality of the solutions present on the market.

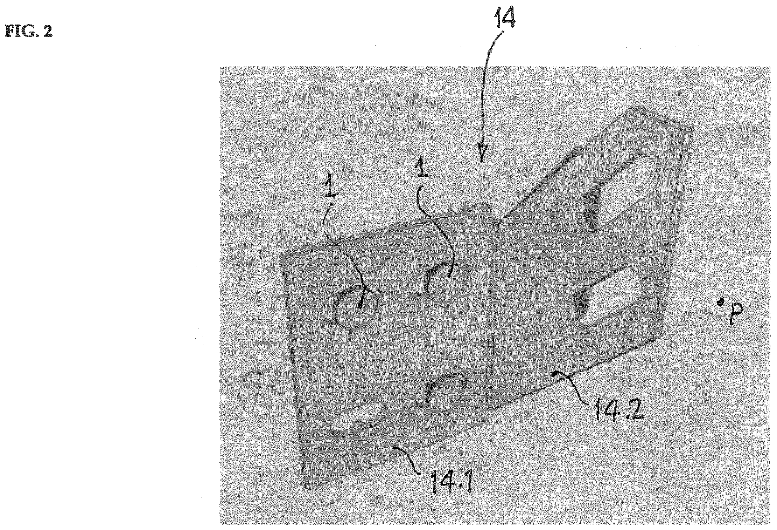

Most of the systems currently present on the market are composed of L-shaped brackets, which are fixed to the wall of the building on which they are fixed first by interlocking and then screwed by screws perforating T-shaped profiles that make up the vertical primary structure of the ventilated wall. (FIGURE 2)

At present, the structure of a ventilated wall allows the insertion of traditional insulating layers, the thickness of which, with the same insulating capacity, is considerably greater than the vacuum insulating materials (with ratios between 7/1 and 10/1); this entails a considerable thickness of the entire insulating package (sometimes even more than 20 cm), creating considerable problems in those areas of the constructions in which the management of space becomes decisive.

This thickness entails the use of a bulky bracket which, in addition to the considerable weight of the structure, entails a considerable heat transmission.

The brackets are usually rectangular in shape, perpendicular to the laying surface, and do not have any expedients to guarantee the thermal cutting of the brackets. Generally, the thickness of the ventilated wall is determined directly by the length of the brackets: different thicknesses correspond to different types of brackets, also excluding the possibility of a fine horizontal adjustment.

The mechanical fixing of the cladding sheets takes place by direct coupling, without the presence of gaskets useful to isolate and protect the sheets from direct friction with the metal.

The clamping means for fixing the cladding sheets are secured to the structure at the front without any system which, in the event of failure of the fixing screws, prevents them from moving forward during the fall.

DE 88 10 439 U1 discloses a system for insulating and dry cladding with limited thickness of the perimeter, with ventilated air gap, of a building wall as above stated. Said system shows the features of the preamble of claim 1.

### Summary of the invention

Object of the present invention is to provide a system for insulating and dry cladding with limited thickness of the perimeter, with ventilated air gap, of a building wall, which has a reduced thickness and is simple and safe to implement.

Features and advantages of the invention will become apparent from the following detailed description of two embodiments, with reference to the accompanying drawing, which shows details important of the invention, as well as from the claims.

The characteristics illustrated herein do not necessarily have to be understood to scale and are represented in such a way that the peculiarities according to the invention are clearly pointed out.

The different characteristics can be realized individually or in any combination, as variants of the invention
Presentation of the figures of the drawing:
- figure 1 shows, in section and plan view, the stratigraphy characteristic of a first exemplary embodiment of the system according to the invention (an example of a ventilated facade with a vertical framework);
- figures 2 and 3 are perspective views of detail, which show, respectively, on a larger scale, some details of the system of figure 1;
- figure 4 is a view similar to that of figure 1, but on a reduced scale;
- figures 5, 6, 7 and 8 are perspective views of detail, which show, respectively, on a larger scale, other details of the system of figure 1;
- figure 9 shows, in section and plan view, the stratigraphy characteristic of a second exemplary embodiment of the system according to the invention (an example of a ventilated facade with a horizontal framework);
- figure 10 is a partial, three-quarters perspective view of the system of figure 9 during the implementation;
- figures 11 and 12 are perspective views of detail, which show, respectively, on a larger scale, other details of the system of figure 9.

It is noted that in the following description the term "front" refers to a surface in view for an observer looking at the facade of a building wall to be lined with the system according to the invention. The term "back" refers to a surface opposite to a "front" surface.

### First embodiment: Ventilated facade with a vertical framework

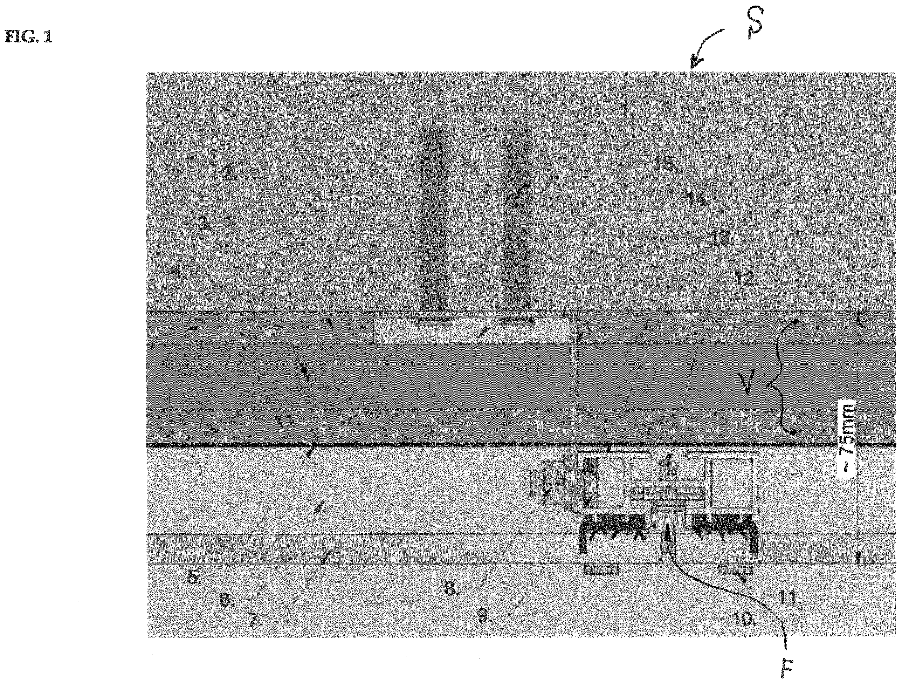

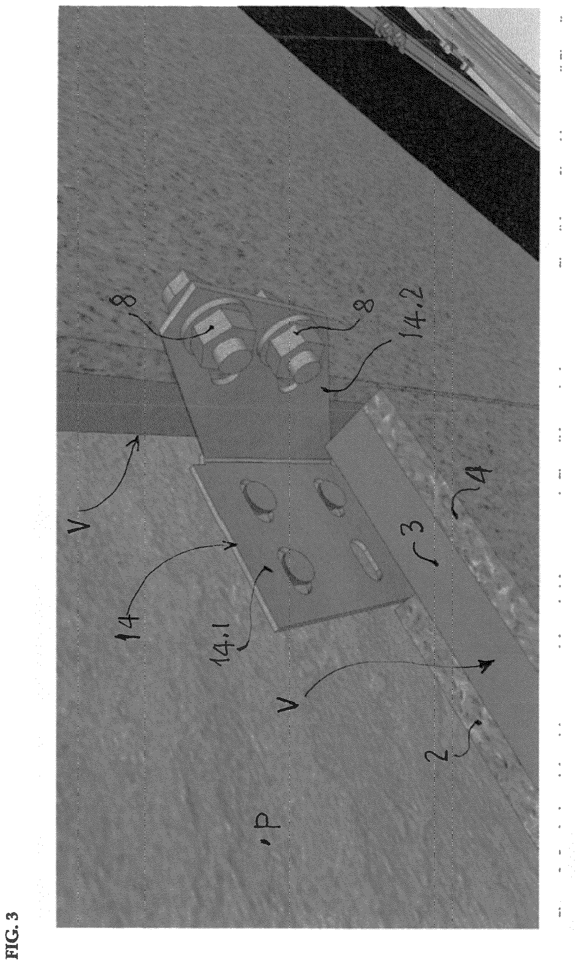

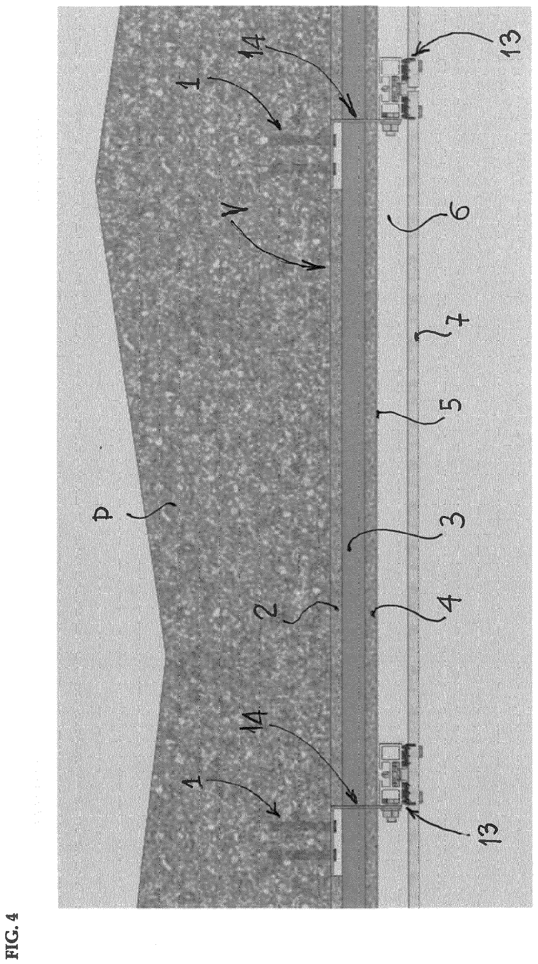

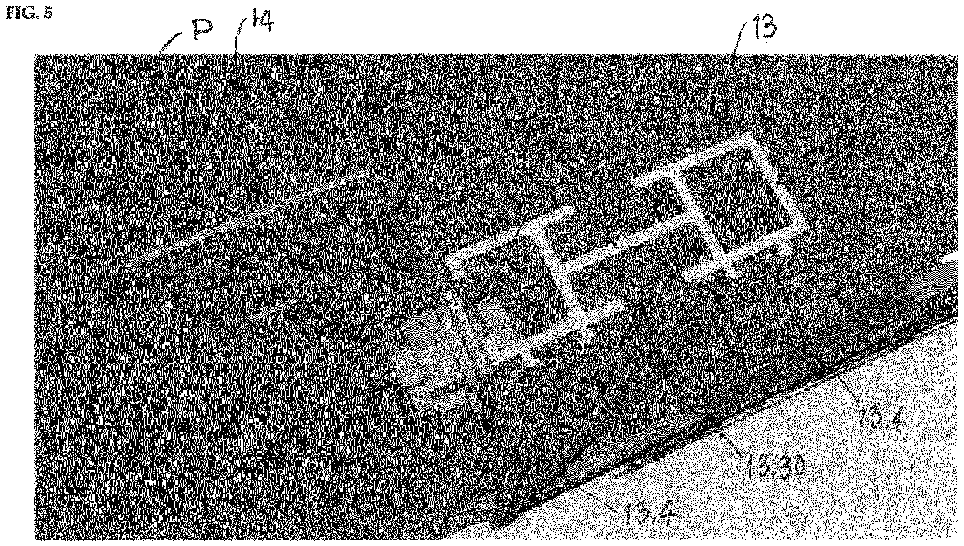

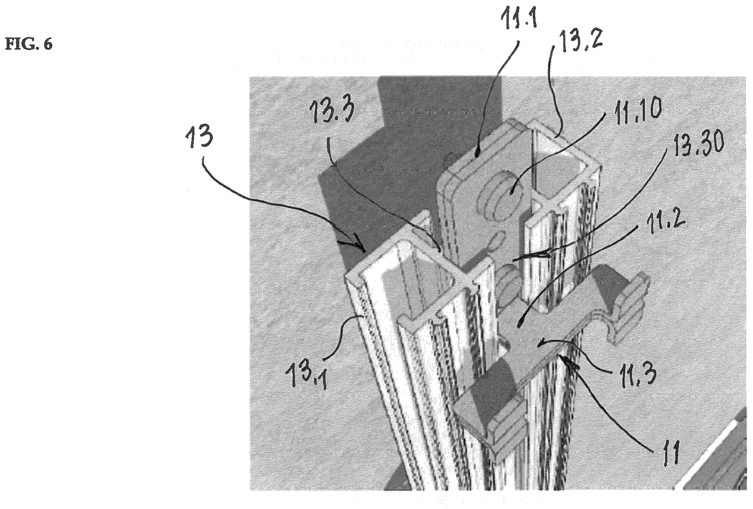

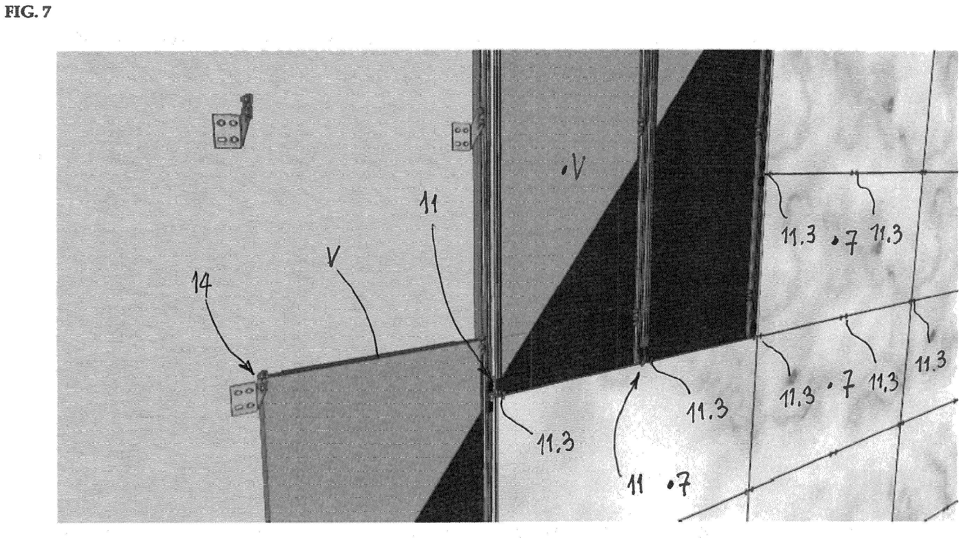

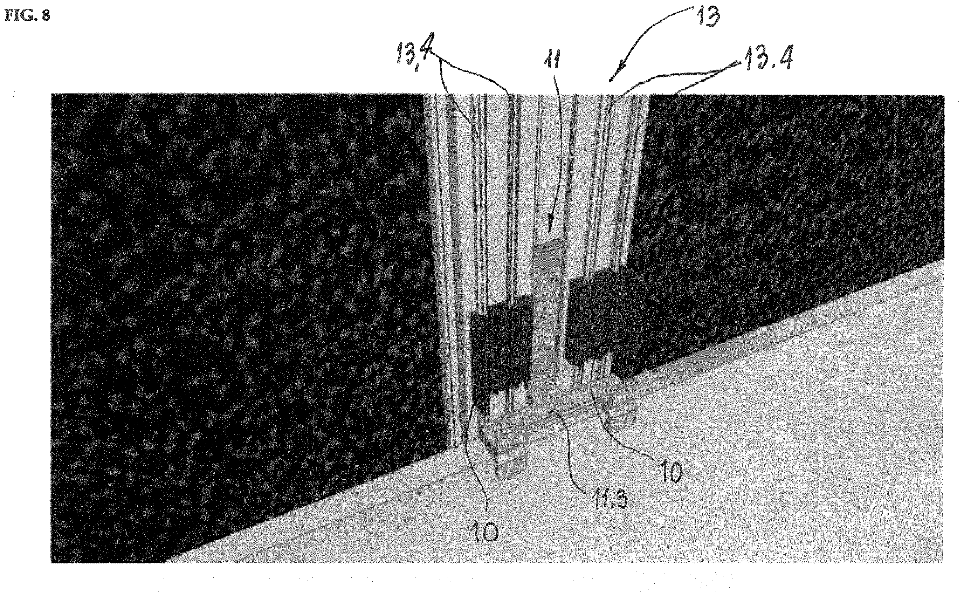

S denotes the system (figure 1) for insulating and dry cladding with limited thickness of the perimeter, with ventilated air gap, of a building wall P, and it comprises:
- a plurality of wall fixing brackets 14 (figure 2), wherein each bracket 14 is configured as an L-shaped plate and comprises:
   - a first wing 14.1 resting against a surface of said wall P, having a plurality of holes, preferably slotted holes, and fixed securely in said wall P by means of a plurality of wall plugs 1 engaged in respective holes of said first wing 14.1;
   - a second wing 14.2 arranged in a vertical plane, orthogonal with respect to said surface of said wall P, projecting frontally with respect to said first wing 14.1 and having a plurality of slotted holes, the major axis of which is inclined with a descending trend from the outside towards the inside of said wall P;
- a plurality of insulating sandwich panels V (figure 3), wherein:
   - each insulating sandwich panel V comprises a vacuum insulating panel 3, a rear cladding 2 in wood fibre fixed to the rear face of said vacuum insulating panel 3 and which is applied against said wall P, and a front cladding 4 in wood fibre fixed to the front face of said vacuum insulating panel 3;
   - each insulating sandwich panel V is juxtaposed between at least two brackets 14 that contain it (figure 4);
- a windproof/rainproof sheet 5 (figure 1) fixed on the front face of said front cladding 4 of each insulating sandwich panel V;
- a plurality of aluminum profiles 13 (figure 5), extending vertically and in which:
   - each aluminum profile 13 comprises:
      - a first longitudinal box-shaped body 13.1, open on one side by means of a continuous longitudinal lateral slit 13.10;
      - a second longitudinal box-shaped body 13.2, aligned with respect to said first body 13.1, according to a reference plane parallel to the front face of said wall P;
      - an integral longitudinal intermediate rib 13.3, joining said two box-shaped bodies 13.1, 13.2; and which is arranged parallel to said reference plane and is opposite respective continuous longitudinal intermediate slits, respectively a rear intermediate slit and a front intermediate slit 13.30, and
      - pairs of continuous linear retaining protrusions 13.4, provided respectively on the external front faces of said two box-shaped bodies 13.1, 13.2;
   - each aluminum profile 13 is fixed with respect to at least two brackets 14 by respective screw means 9, the head of which, hammer-shaped, is inserted in said first box-shaped body 13.1 and whose shank is extended through said lateral slit 13.10 of said first box-shaped body 13.1, said screw means 9 being clamped by means of a corresponding flanged nut 8;
- a plurality of metal supporting clamping means 11 (figure 6), wherein each clamping means 11 is configured as a bracket with a shelf and comprises, in an integral body:
   - an L-shaped arm comprising a first wing 11.1 fixed, by means of perforating screw means 11.10, to a respective profile 13 in juxtaposition against said intermediate rib 13.3 and a second wing 11.2 extending frontally through said front slit 13.30 of said respective profile 13;
   - a shelf 11.3 integral with said second wing 11.2 and projecting externally and frontally with respect to said respective profile 13, wherein said shelf 11.3 is configured as supporting and retaining clamping shelf;
- a plurality of external finishing panels 7 (figure 7), arranged according to a plane parallel to said surface of said wall P and wherein:
   - each finishing panel 7 is supported / retained by means of at least two shelves 11.3 of two adjacent supporting clamping means 11;
   - a continuous slit F is provided between two adjacent finishing panels 7, at said supporting clamping means 11;
   - a ventilated air gap 6 is provided between said plurality of external finishing panels 7 and said windproof/rainproof sheets 5 of said plurality of insulating sandwich panels V;
   a plurality of pairs of EPDM plug gaskets 10 (figure 8), wherein:
   - each gasket 10 of said pair of plug gaskets is engaged by means of form / force / snap fitting with respect to a corresponding pair of continuous linear retaining protrusions 13.4 provided on a respective external front face of a corresponding of said two box-shaped bodies 13.1, 13.2 of a profile 13, so that the two gaskets of a pair of plug gaskets 10 are arranged at the two sides of said continuous slit F at said supporting clamping means 11.

It should be noted that, as indicated by 15 in Figure 1, a corresponding slot is provided at the fixing blocks 1 to the wall P in the rear covering 2 of the insulating panels V.

### Second embodiment: Ventilated facade with a horizontal framework

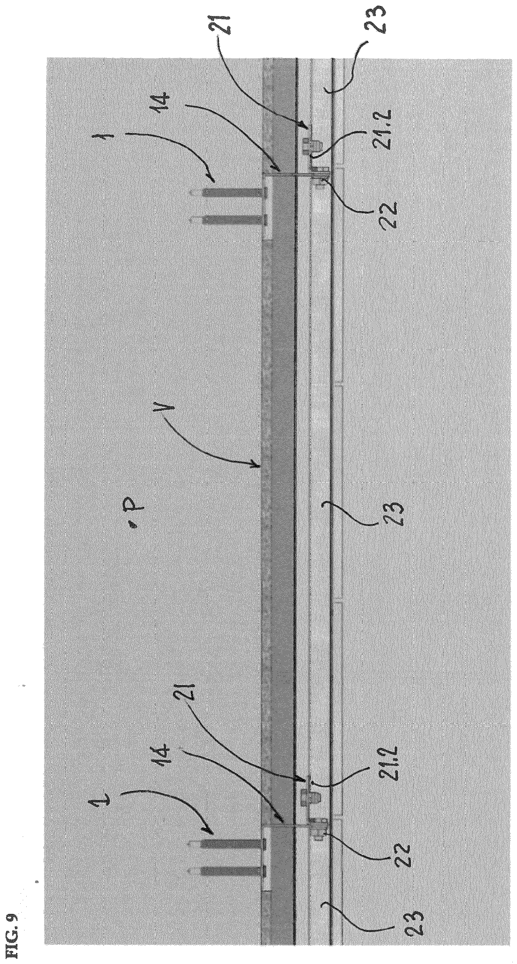

In this second embodiment, S1 (figure 9) designates the system for insulating and dry cladding with limited thickness of the perimeter, with ventilated air gap, of a building wall P.

The parts of the system S1 corresponding, by structure and function, to parts of the system S as above described are indicated with the same references and are not further described. Reference is therefore made in the following to the preceding description of the system S according to the invention.

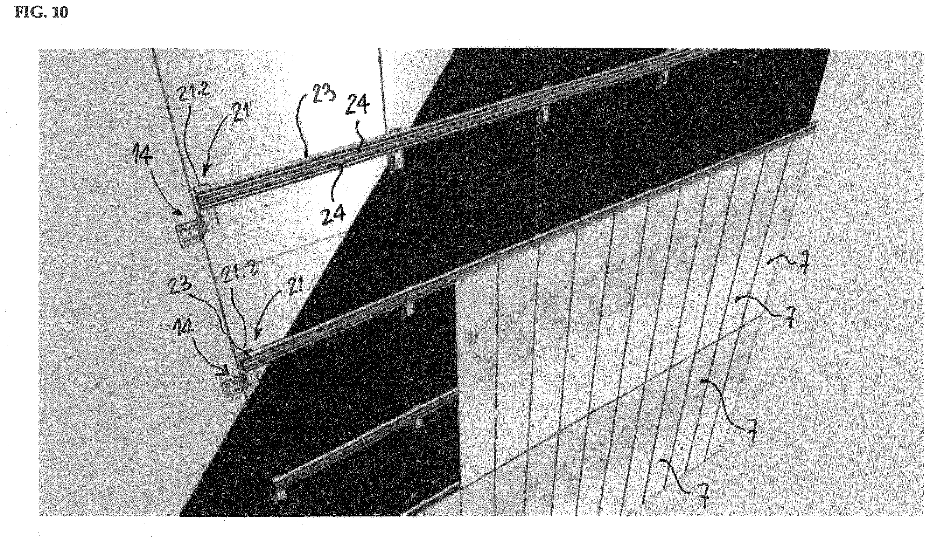

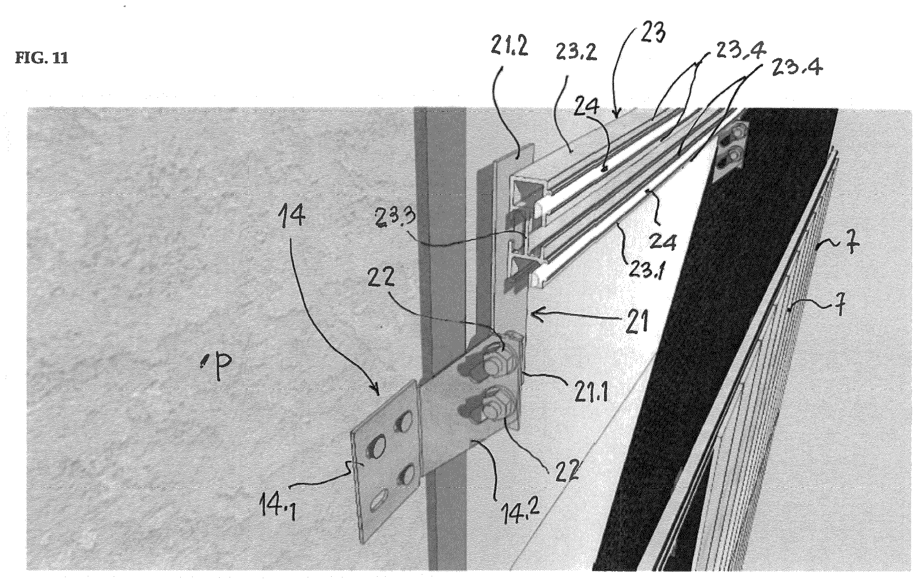

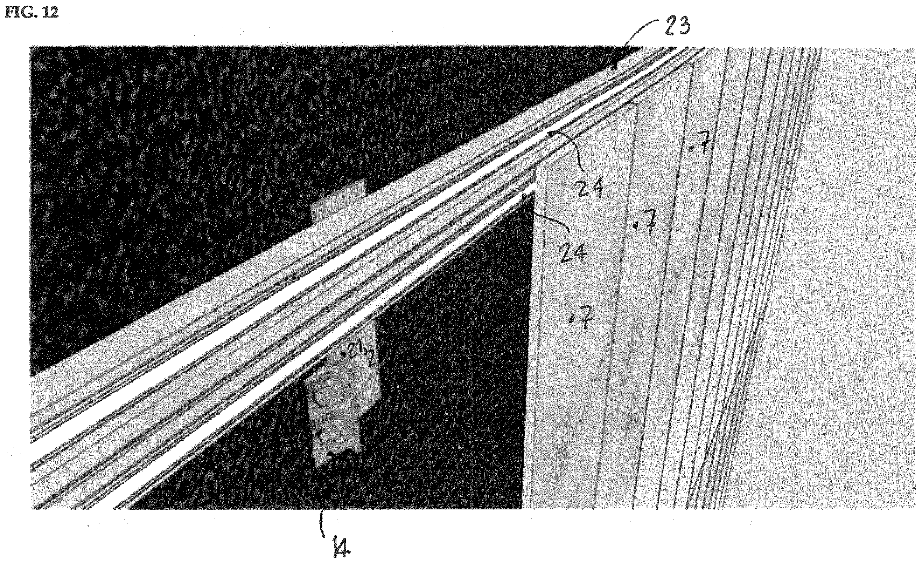

In a variant with respect to the system S, the system S1 comprises:
- for each bracket 14, a metal connection angle bar 21 in the shape of an L lying on its side (figure 11), which is rigidly connected, by means of a first wing 21.1, by screw and nut means 22, with respect to said second wing 14.2 of said bracket 14, and has a second wing 21.2 extending in a plane parallel to said surface of said wall P;
- a plurality of aluminum profiles 23 (figures 11 and 12), fixed with respect to the second wing 21.2 of respective connecting angles 21, extending horizontally and in which:
- each aluminum profile 23 comprises:
   - a first longitudinal box-like body 23.1;
   - a second longitudinal box-like body 23.2 aligned with respect to said first body 23.1 according to a reference plane parallel to the front face of said wall P;
   - an integral longitudinal intermediate rib 23.3 joining said two box-like bodies 23.1, 23.2, which is parallel to said reference plane and is opposite respective continuous longitudinal intermediate slits, respectively a rear intermediate slit and a front intermediate slit, and
   - pairs of continuous linear containment projections 23.4 forming two containment channels 23.4 provided respectively on the front outer faces of said two box-like bodies 23.1, 23.2 of each profile 23;
- each aluminum profile 23 is fixed with respect to at least two brackets 14 by means of at least two respective connecting angles 21;
- a bonding adhesive means 24 arranged to fill in excess of each of said containment channels 23.4, so that said adhesive means 24 extends partially and frontally beyond the respective containment channel 23.4;
- a plurality of outer finishing panels 27 (figure 10), arranged in a plane parallel to said surface of said wall P and in which:
- each finishing panel 7 is supported/held in juxtaposition against said containment channels 23.4 by gluing with respect to the bonding adhesive means 24 of each containment channel 23.4.

### Advantages of the invention

The present invention allows the use of vacuum insulating panels with a reduced thickness suitably pre-assembled, without the risk of damaging the casing thereof. The use of vacuum insulating panels with reduced thickness allows to contain the overall thickness of the ventilated facade, allowing its insertion also in critical areas from the point of view of space, such as, for example, the balconies.

The vacuum insulating panel (so-called VIP: Vacuum Insulated Panel) is protected both on the front face and on the rear face by two layers of wood fiber: The front layer, as large as the VIP panel, allows to protect the outer casing of the vacuum insulation from any accidental impacts which may occur during assembly; the rear layer allows to protect the VIP panel from any roughness present on the installation surface. Moreover, the rear layer is shaped so as to allow the passage of the bracket and of the heads of the anchoring blocks, so as to ensure the planarity of the front surface of the insulating layer.

The particular geometry of the bracket, with slots extending from the outside toward the inside, hinders the formation of the thermal bridge and thermal transmission by conduction. The slotted holes allow to adjust the thickness of the ventilated facade by adapting it to the insulating layer; moreover, the position of the holes allows to fix the various elements of the structure always acting "from the outside", allowing to maintain the integrity of the insulating layer.

The particular design of the profile allows:
- the simple connection of the same with the anchoring brackets,
- the insertion and fixing of the supporting clamping means of the covering layer,
- the positioning of the gaskets,
- the laying of structural adhesive in case it is not possible to use mechanical couplings.

The supporting clamping means inserted inside the profile prevent forward translation of the couplings in case the fixing screws lose the grip: their sliding would be only vertical and would prevent the cladding panel from falling.

The presence of the rear slot also allows the profile to be positioned horizontally.

The insertion of the gasket as a mechanical compensation element and due to its capacity to absorb vibrations, allows the use of different types of material (natural stone, stoneware, wood, etc.) as well as to use as also cladding complex technical elements such as, for example, photovoltaic modules glass/glass.

As it is apparent from the foregoing, the present invention achieves the object set forth in the introductory part of the present specification.

## Claims

1. System (S, S1) for insulating and dry cladding with limited thickness of the perimeter, with ventilated air gap, of a building wall (P), **characterized in that** it comprises:
- a plurality of wall fixing brackets (14),
- a plurality of aluminium profile (13), extending vertically, or
- a plurality of aluminium profiles (23), extending horizontally,
wherein each bracket (14) is configured as an
L-shaped plate and comprises:
- a first wing (14.1) resting against a surface of said wall (P), having a plurality of holes, preferably slotted holes, and fixed securely in said wall (P) by means of a plurality of wall plugs (1) engaged in respective holes of said first wing (14. 1);
- a second wing (14.2) arranged in a vertical plane, orthogonal with respect to said surface of said wall (P), projecting frontally with respect to said first wing (14.1) and having a plurality of slotted holes,
wherein:
- each aluminium profile (13, 23) comprises:
- a first longitudinal body (13.1, 23.1);
- a second longitudinal body (13.2, 23.2) aligned with respect to said first body (13.1, 23.1) according to a reference plane parallel to the front face of said wall (P);
- an integral longitudinal intermediate rib (13.3, 23.3) joining said two bodies (13.1, 13.2; 23.1, 23.2) and which is arranged parallel to said reference plane and is opposite respective continuous longitudinal intermediate slits, a rear intermediate slit and a front intermediate slit (13.30), respectively;
and wherein:
- each aluminium profile (13, 23) is fixed with respect to at least two brackets (14) and supports supporting means (11), or joining means (24), configured for fixing a plurality of external finishing panels (7);
**characterized in that** the major axis of the second wing (14.2) is inclined with a descending trend from the outside towards the inside of said wall (P);
and that the first and second longitudinal bodies (13.1, 23.1; 13.2, 23.2) are box-shaped,
and that pairs of continuous linear protrusions (13.4, 23.4) are provided respectively on the external front faces of said two longitudinal box-shaped bodies (13.1, 13.2; 23.1, 23.2).

2. System (S) according to claim 1, **characterized in that** it comprises:
- a plurality of insulating sandwich panels (V), wherein:
- each insulating sandwich panel (V) comprises a vacuum insulating panel (3), a rear cladding (2) in wood fibre fixed to the rear face of said vacuum insulating panel (3) and which is applied against said wall (P), and a front cladding (4) in wood fibre fixed to the front face of said vacuum insulating panel (3);
- each insulating sandwich panel (V) is juxtaposed between at least two brackets (14) that contain it;
- a windproof/rainproof sheet (5) fixed on the front face of said front cladding (4) of each insulating sandwich panel (V);
- a plurality of metal supporting clamping means (11), wherein each clamping means (11) is configured as a bracket with shelf and comprises, in an integral body:
- an L-shaped arm comprising a first wing (11.1) fixed, by means of perforating screw means (11.10), to a respective profile (13) in juxtaposition against said intermediate rib (13.3) and a second wing (11.2) extending frontally through said front slit (13.30) of said respective profile (13);
- a shelf (11.3) integral with said second wing (11.2) and projecting externally and frontally with respect to said respective profile (13), wherein said shelf (11.3) is configured as supporting and retaining clamping shelf;
- said plurality of external finishing panels (7), arranged according to a plane parallel to said surface of said wall (P) and wherein:
- each finishing panel (7) is supported / retained by means of at least two shelves (11.3) of two adjacent supporting clamping means (11);
- a continuous slit (F) is provided between two adjacent finishing panels (7), at said supporting clamping means (11);
- a ventilated air gap (6) is provided between said plurality of external finishing panels (7) and said windproof/rainproof sheets (5) of said plurality of insulating sandwich panels (V).

3. -Systems (S) according to claim 1 and/or 2, **characterized in that** it comprises a plurality of pairs of EPDM plug gaskets (10), wherein:
- each gasket (10) of said pair of plug gaskets is engaged by means of form / force / snap fitting with respect to a corresponding pair of continuous linear protrusions (13.4) provided on a respective external front face of a corresponding of said two box-shaped bodies (13.1, 13.2) of a profile (13), so that the two gaskets of a pair of plug gaskets (10) are arranged at the two sides of said continuous slit (F) at said supporting clamping means (11) fixed with respect to said profile (13).

4. System (S) according to claim 1 and/or 2, **characterized in that** a corresponding recess is provided in the rear cladding (2) of said insulating panels (V), at the wall plugs (1) for fixing to the wall (P).

5. System (S1) according to claim 1, **characterized in that**:
- for each bracket (14), there is provided a metal connection angle bar (21) in the shape of an L lying on its side, which is rigidly connected, by means of a first wing (21.1), by screw and nut means (22), with respect to said second wing (14.2) of said bracket (14), and has a second wing (21.2) extending in a plane parallel to said surface of said wall (P);
- said pair of continuous linear protrusions (23.4) of each aluminium profile (23) form two containing channels (23.4), provided on the external front faces of said two box-shaped bodies (23.1, 23.2) of each profile (23), respectively;
- a joining gluing means (24) is arranged to fill each of said containing channels (23.4);
- each finishing panel (7) is supported / retained in juxtaposition against said containing channels (23.4) by means of gluing with respect to said joining gluing means (24) arranged in said containing channels (23.4).

## Patentansprüche

1. System (S, S1) zur Isolierung und Trockenaußenverkleidung mit reduzierter Dicke, mit belüftetem Zwischenraum, einer Gebäudewand (P), **dadurch gekennzeichnet, dass** es Folgendes umfasst:
- eine Vielzahl von Halterungen (14) zur Verankerung in der Mauer,
- eine Vielzahl von Aluminiumprofilen (13), die sich vertikal erstrecken, oder
- eine Vielzahl von Aluminiumprofilen (23), die sich horizontal erstrecken,
wobei jede Halterung (14) als L-förmige Platte konfiguriert ist und Folgendes umfasst:
- einen ersten Flügel (14.1), der an einer Oberfläche der besagten Wand (P) anliegt, die eine Vielzahl von Löchern, vorzugsweise Langlöchern, aufweist und an der Mauer in der besagten Wand (P) mittels einer Vielzahl von Dübeln (1) befestigt ist, die in entsprechende Löcher des besagten ersten Flügels (14.1) eingreifen;
- einen zweiten Flügel (14.2), der in einer vertikalen Ebene orthogonal zu der besagten Oberfläche der besagten Wand (P) angeordnet ist, vorne in Bezug auf den besagten ersten Flügel (14.1) vorspringt und eine Vielzahl von Langlöchern aufweist;
wobei:
- jedes Aluminiumprofil (13, 23) Folgendes umfasst:
- einen ersten Längskörper (13.1, 23.1);
- einen zweiten Längskörper (13.2, 23.2), der in Bezug auf den besagten ersten Körper (13.1, 23.1) gemäß einer Bezugsebene parallel zur Vorderseite der besagten Wand (P) ausgerichtet ist;
- eine integrale Längszwischenrippe (13.3, 23.3) zur Verbindung der besagten beiden Körper (13.1, 13.2; 23.1, 23.2) und die parallel zu der besagten Bezugsebene angeordnet ist und der jeweils durchgehende Längszwischenschlitze, bzw. ein hinterer Zwischenschlitz und ein vorderer Zwischenschlitz (13.30), gegenüberliegt;
und wobei:
- jedes Aluminiumprofil (13, 23) in Bezug auf mindestens zwei Halterungen (14) befestigt ist und Stützmittel (11) bzw. Verbindungsmittel (24), die für die Befestigung einer Vielzahl von Außenverkleidungsplatten (7) konfiguriert sind, trägt;
**dadurch gekennzeichnet, dass** die Hauptachse des zweiten Flügels (14.2) mit fallendem Verlauf von der Außenseite zur Innenseite der besagten Wand (P) geneigt ist;
und dadurch, dass der erste und zweite Längskörper (13.1, 23.1; 13.2, 23.2) kastenförmig geformt sind;
und dadurch, dass Paare von fortlaufenden linearen Vorsprüngen (13.4, 23.4) jeweils an den vorderen Außenflächen der besagten beiden kastenförmigen Körper (13.1, 13.2; 23.1, 23.2) vorgesehen sind.

2. System (S) gemäß Anspruch 1, **dadurch gekennzeichnet, dass** es Folgendes umfasst:
- eine Vielzahl von Sandwich-Isolierplatten (V), wobei:
- jede Sandwich-Isolierplatte (V) eine Vakuum-Isolierplatte (3), eine rückseitige Verkleidung (2) aus Holzfasern, die an der Rückseite der besagten Vakuum-Isolierplatte (3) befestigt ist und an der besagten Wand (P) anliegt, und eine vordere Verkleidung (4) aus Holzfasern, die an der Vorderseite der besagten Vakuum-Isolierplatte (3) befestigt ist, umfasst;
- jede Sandwich-Isolierplatte (V) nebeneinander zwischen mindestens zwei Halterungen (14), die sie halten, angeordnet ist;
- eine windsichere/regensichere Plane (5), die an der Vorderseite der besagten vorderen Verkleidung (4) jeder Sandwich-Isolierplatte (V) befestigt ist;
- eine Vielzahl von Metallstützklemmmitteln (11), wobei jedes Klemmmittel (11) als eine Halterung mit einer Konsole konfiguriert ist und Folgendes in einem integralen Körper umfasst:
- einen L-förmigen Arm, umfassend einen ersten Flügel (11.1), der mit Hilfe von Perforationsschraubenmittel (11.10) an einem entsprechenden Profil (13) neben der besagten Zwischenrippe (13.3) befestigt ist, und einen zweiten Flügel (11.2), der sich nach vorne durch den besagten vorderen Schlitz (13.30) des besagten entsprechenden Profils (13) erstreckt;
- eine Konsole (11.3), die mit dem besagten zweiten Flügel (11.2) ein Ganzes bildet und in Bezug auf das besagte jeweilige Profil (13) außen und vorne vorspringt, wobei die besagte Konsole (11.3) als Stütz- und Halteklemmkonsole konfiguriert ist;
- die besagte Vielzahl von Außenverkleidungsplatten (7), die in einer Ebene parallel zu der besagten Oberfläche der besagten Wand (P) angeordnet sind und wobei:
- jede Verkleidungsplatte (7) durch mindestens zwei Konsolen (11.3) von zwei benachbarten Stützklemmmitteln (11) gestützt/gehalten wird;
- ein durchgehender Spalt (F) zwischen zwei benachbarten Verkleidungsplatten (7) in Übereinstimmung mit den besagten Stützklemmmitteln (11) vorgesehen ist;
- ein belüfteter Hohlraum (6) zwischen der besagten Vielzahl von Außenverkleidungsplatten (7) und den besagten windsicheren/regensicheren Planen (5) der besagten Vielzahl von Sandwich-Isolierplatten (V) vorgesehen ist.

3. System (S) gemäß Anspruch 1 und/oder 2, **dadurch gekennzeichnet, dass** es eine Vielzahl von EPDM-Dübeldichtungspaaren (10) umfasst, wobei:
- jede Dichtung (10) des besagten Paares von Dübeldichtungen durch eine Form-/Kraft-/Schnappkopplung in Bezug auf ein entsprechendes Paar von fortlaufenden linearen Vorsprüngen (13.4) in Anspruch genommen wird, die an einer jeweiligen vorderen Außenfläche eines entsprechenden der besagten kastenförmigen Körper (13.1, 13.2) eines Profils (13) vorgesehen sind, so dass die beiden Dichtungen eines Paars von Dübeldichtungen (10) auf beiden Seiten des besagten durchgehenden Spaltes (F) in Übereinstimmung mit den besagten Stützklemmmitteln (11), befestigt in Bezug auf das besagte Profil (13), angeordnet sind.

4. System (S) gemäß Anspruch 1 und/oder 2, **dadurch gekennzeichnet, dass** in Übereinstimmung mit den Dübeln (1) zur Befestigung an der Wand (P) in der rückseitigen Verkleidung (2) der besagten Isolierplatten (V) eine entsprechende Nut vorgesehen ist.

5. System (S1) gemäß Anspruch 1, **dadurch gekennzeichnet, dass**:
- für jede Halterung (14) ein Metallwinkel (21) in Form eines liegenden L vorgesehen ist, die mittels eines ersten Flügels (21.1) durch Schrauben- und Muttermittel (22) in Bezug auf den besagten zweiten Flügel (14.2) der besagten Halterung (14) starr verbunden ist, und einen zweiten Flügel (21.2) aufweist, der sich in einer Ebene parallel zu der besagten Oberfläche der besagten Wand (P) erstreckt;
- die besagten Paare von fortlaufenden linearen Vorsprüngen (23.4) jedes Aluminiumprofils (23) zwei Einschlusskanäle (23.4) bilden, die jeweils an den vorderen Außenflächen der besagten beiden kastenförmigen Körper (23.1, 23.2) jedes Profils (23) vorgesehen sind;
- ein Verbindungsklebemittel (24) zur Füllung jedes dieser Einschlusskanäle (23.4) angebracht wird;
- jede Verkleidungsplatte (7) gegen die besagten Einschlusskanäle (23.4) durch Verkleben in Bezug auf das in den besagten Einschlusskanälen (23.4) angebrachte besagte Verbindungsklebemittel (24) abgestützt/gehalten wird.

## Revendications

1. Système (S, S1) pour l'isolation et le revêtement périphérique à sec à faible épaisseur, avec cavité ventilée, d'un mur (P) d'un bâtiment, **caractérisé par le fait qu'**il comprend :
- une multitude de brides (14) d'ancrage mural,
- une multitude de profilés en aluminium (13), étendus verticalement, ou
- une multitude de profilés en aluminium (23), étendus horizontalement,
où chaque bride (14) est configurée comme une plaque en L et comprend :
- une première aile (14.1) appuyée contre une surface dudit mur (P), comportant une multitude de trous, de préférence des trous oblongs, et fixée à la paroi dudit mur (P) au moyen d'une multitude de chevilles (1) engagées dans les trous respectifs de ladite première aile (14.1) ;
- une seconde aile (14.2) disposée dans un plan vertical, orthogonal par rapport à ladite surface dudit mur (P), faisant saillie antérieurement par rapport à ladite première aile (14.1) et présentant une multitude de trous oblongs ;
où :
- chaque profilé en aluminium (13, 23) comprend :
- un premier corps longitudinal (13.1, 23.1) ;
- un deuxième corps longitudinal (13.2, 23.2) aligné avec le premier corps (13.1, 23.1) selon un plan de référence parallèle à la face avant dudit mur (P) ;
- une nervure intermédiaire longitudinale intégrale (13.3, 23.3) reliant lesdits deux corps (13.1, 13.2 ; 23.1, 23.2) et placée parallèlement audit plan de référence et opposée à des fentes intermédiaires longitudinales continues respectives, respectivement une fente intermédiaire arrière et une fente intermédiaire avant (13.30) ;
et où :
- chaque profilé en aluminium (13, 23) est fixé par rapport à au moins deux brides (14) et soutient des moyens de support (11), respectivement des moyens d'assemblage (24), configurés pour la fixation d'une multitude de panneaux de finition extérieurs (7) ;
**caractérisé par le fait que** l'axe principal de la deuxième aile (14.2) est incliné vers le bas, de l'extérieur vers l'intérieur dudit mur (P) ;
et **par le fait que** les premier et deuxième corps longitudinaux (13.1, 23.1 ; 13.2, 23.2) sont en forme de boîte ;
et **par le fait que** des paires de saillies linéaires continues (13.4, 23.4) sont prévues respectivement sur les faces externes avant de ces deux corps en forme de boîte (13.1, 13.2 ; 23.1, 23.2).

2. Système (S) selon la revendication 1, **caractérisé par le fait qu'**il comprend :
- une multitude de panneaux isolants sandwichs (V), où :
- chaque panneau isolant sandwich (V) comprend un panneau isolant sous vide (3), un revêtement arrière (2) en fibre de bois fixé sur la face arrière dudit panneau isolant sous vide (3) et qui est appliqué contre ledit mur (P), et un revêtement avant (4) en fibre de bois fixé sur la face avant dudit panneau isolant sous vide (3) ;
- chaque panneau isolant sandwich (V) est juxtaposé entre au moins deux brides (14) le contenant ;
- une feuille de protection contre le vent / la pluie (5) fixée sur la face avant dudit revêtement avant (4) de chaque panneau isolant sandwich (V) ;
- une multitude de moyens métalliques à poignée de support (11), dans lequel chaque moyen à poignée (11) est configuré comme une bride avec une patte et comprend, dans un corps intégral :
- un bras en forme de L comprenant une première aile (11.1) fixée, au moyen de vis taraudeuses (11.10), à un profilé respectif (13) en juxtaposition contre ladite nervure intermédiaire (13.3) et une seconde aile (11.2) étendue antérieurement à travers ladite fente avant (13.30) dudit profilé respectif (13) ;
- une patte (11.3) solidaire de ladite seconde aile (11.2) et faisant saillie extérieurement et antérieurement par rapport au profilé respectif (13), où ladite patte (11.3) est configurée comme une patte de support et de retenue à poignée ;
- ladite multitude de panneaux de finition extérieurs (7), disposés dans un plan parallèle à ladite surface dudit mur (P) et où :
- chaque panneau de finition (7) est supporté/retenu par au moins deux pattes (11.3) de deux moyens (11) à poignée de support adjacents ;
- une fente continue (F) est prévue entre deux panneaux de finition adjacents (7) au niveau desdits moyens à poignée de support (11) ;
- une cavité ventilée (6) est prévue entre ladite multitude de panneaux de finition extérieurs (7) et lesdites feuilles de protection contre le vent et la pluie (5) de ladite multitude de panneaux isolants sandwiches (V).

3. Système (S) selon la revendication 1 et/ou 2, **caractérisé par le fait qu'**il comprend une multitude de paires de joints à cheville en EPDM (10) où :
- chaque joint (10) de ladite paire de joints à cheville est engagé au moyen d'un un couplage de forme / de force / à encliquetage par rapport à une paire correspondante de saillies linéaires continues (13.4) prévues sur une face extérieure avant respective de l'un correspondant desdits deux corps en forme de boîte (13.1, 13.2) d'un profil (13), de sorte que les deux joints d'une paire de joints à cheville (10) sont disposés des deux côtés de ladite fente continue (F) au niveau desdits moyens à poignée de support (11) fixes par rapport audit profil (13).

4. Système (S) selon la revendication 1 et/ou 2, **caractérisé par le fait que**, au niveau des chevilles (1) de fixation au mur (P), le revêtement arrière (2) desdits panneaux isolants (V) prévoit une rainure correspondante.

5. Système (S1) selon la revendication 1, **caractérisé par le fait que** :
- pour chaque bride (14), est prévue une cornière métallique de raccordement (21) en forme de L couché, qui est reliée rigidement, au moyen d'une première aile (21.1), par des moyens à vis et écrou (22), par rapport à ladite seconde aile (14.2) de ladite bride (14), et qui présente une seconde aile (21.2) étendue dans un plan parallèle à ladite surface dudit mur (P) ;
- lesdites paires de saillies linéaires continues (23.4) de chaque profilé en aluminium (23) forment deux canaux de confinement (23.4), prévus respectivement sur les faces externes avant desdits deux corps en forme de boîte (23.1, 23.2) de chaque profilé (23);
- un moyen de collage (24) est disposé pour remplir chacun de ces canaux de confinement (23.4) ;
- chaque panneau de finition (7) est supporté/retenu en juxtaposition contre lesdits canaux de confinement (23.4) au moyen d'un collage par rapport audit moyen de collage de liaison (24) disposé dans lesdits canaux de confinement (23.4).
